# EUROPEAN PATENT APPLICATION

(11) **EP 3 654 120 A1**
(43) Date of publication of application: **20.05.2020**
(21) Application number: 19206856.7
(22) Date of filing: 04.11.2019
(51) Int. Cl.: G05B 17/02

(54) **DEVICE CONTROL SYSTEM COMPRISING A SIMULATOR**

(30) Priority: 16.11.2018 JP 2018215451
(71) Applicant: MinD in a Device Co., Ltd., Tokyo 156-0055 (JP); The University of Tokyo, Bunkyo-ku Tokyo 113-8654 (JP)
(72) Inventor: Watanabe, Masataka, Bunkyo-ku, Tokyo 113-8654 (JP); Nakamura, Tsubasa, Setagaya-ku, Tokyo 156-0055 (JP)
(74) Representative: Winter, Brandl, Fürniss, Hübner, Röss, Kaiser, Polte - Partnerschaft mbB

(57) **Abstract**

A sensor unit (11, 31) outputs a real sensor signal corresponding to a measured physical quantity. A controller (2) controls a control target device (1, 101, 201, 301, 401) in an environmental domain on the basis of the real sensor signal. The controller (2) performs a simulation of a specific phenomenon in the environmental domain under a simulation condition, and virtually measures the specific physical quantity on the basis of a simulation result and thereby generates a virtual sensor signal; changes the simulation condition on the basis of the real sensor signal and the virtual sensor signal; and generates a control signal for the control target device on the basis of the simulation condition and/or the simulation result. The simulation, the generation of the virtual sensor signal, and the change of the simulation condition are iteratively performed until a sensor error between the real sensor signal and the virtual sensor signal is converged.

## Description

### BACKGROUND

### Technical Field

The present invention relates to a device control system.

### Background Art

In general, in a device control system, a control target device such as motion object (moving object, robot, or the like) or electronic device (lighting equipment, air conditioner, or the like) is automatically controlled by a controller in accordance with a sensor signal obtained by a sensor or manually controlled by a user's instruction.

For example, with regard to a flying object as a control target device and its peripheral domain, a levitation mobile system calculates a movement of a body of the flying object using a fluid-structure interaction analysis assuming that air flow in an outer side of the peripheral domain is a steady flow and thereby determines a behavior of the flying object, and performs path prediction based on the behavior and drives its wings so as to make the predicted path closer to a target path (see PATENT LITERATURE #1, for example). Further, for example, an automobile as a control target device performs autonomous driving based on sensor signals of various sensors (see PATENT LITERATURE #2, for example). Furthermore, for example, a workrobot as a control target device controls an actuator and/or a motor on the basis of sensor signals of various sensors and thereby performs a specific motion. Furthermore, for example, a smart house controls a home electronic appliance (lighting equipment, air conditioner and/or the like) on the basis of sensor signals of various sensors (see PATENT LITERATURE #3, for example).

### Citation List

### Patent Literature

PATENT LITERATURE #1: Japan Patent Application Publication No. 2005-263073.
PATENT LITERATURE #2: Japan Patent Application Publication No. 2018-106438.
PATENT LITERATURE #3: Japan Patent Application Publication No. 2013-169104.

### SUMMARY

### Technical Problem

In the aforementioned systems, even though the control target device is controlled on the basis of a sensor signal, the control target device may not optimally controlled.

For example, for the control, the aforementioned systems may not take into account status information that does not directly appear in the sensor signals, such as status information of the control target device, status information of peripheral environment of the control target device, or the like.

Further, for example, if status information is calculated from sensor signals in accordance with a specific calculation model and the control is performed on the basis of the calculated status information, the systems may not take into account a calculation error of the status information due to the calculation model.

The present invention has been conceived in view of the aforementioned problem, and it is an object of the present invention to obtain a control system in which a control target device is properly controlled.

### Solution to Problem

A device control system according to an aspect of the present invention includes: a control target device fixed or moving in an environmental domain; a sensor unit that is arranged in either the environmental domain or the control target device, and measures a specific physical quantity and outputs a real sensor signal corresponding to the measured physical quantity; and a controller that controls the control target device on the basis of the real sensor signal. The controller includes: (a) a simulator that (a1) performs a simulation of a specific phenomenon in the environmental domain under a simulation condition that is set as specific status information of the control target device and/or the environmental domain and thereby derives a simulation result, and (a2) virtually measures the specific physical quantity on the basis of the simulation result and thereby generates a virtual sensor signal; (b) a simulation condition changing unit that changes the simulation condition on the basis of the real sensor signal and the virtual sensor signal; and (c) a control signal generating unit that generates a control signal for the control target device on the basis of the simulation condition and/or the simulation result. Further, iteratively until a sensor error between the real sensor signal and the virtual sensor signal is converged so as to satisfy a predetermined condition, (a) the simulator performs the simulation and the generation of the virtual sensor signal and (b) the simulation condition changing unit performs the change of the simulation condition.

A device control method according to an aspect of the present invention includes the steps of: (a) acquiring a real sensor signal from a sensor unit that is arranged in either an environmental domain or a control target device fixed or moving in the environmental domain and measures a specific physical quantity and outputs the real sensor signal corresponding to the measured physical quantity; (b) deriving a simulation result by performing a simulation of a specific phenomenon in the environmental domain under a simulation condition that is set as specific status information of the control target device and/or the environmental domain; (c) generating a virtual sensor signal by virtually measuring the specific physical quantity on the basis of the simulation result; (d) changing the simulation condition on the basis of the real sensor signal and the virtual sensor signal; and (e) generating a control signal for the control target device on the basis of the simulation condition and/or the simulation result. Further, iteratively until a sensor error between the real sensor signal and the virtual sensor signal is converged so as to satisfy a predetermined condition, performing (a) the simulation and the generation of the virtual sensor signal and (b) the change of the simulation condition.

A device control program according to an aspect of the present invention causes a computer to act as the aforementioned controller.

These and other objects, features and advantages of the present disclosure will become more apparent upon reading of the following detailed description along with the accompanied drawings.

### BRIEF DESCRIPTION OF THE DRAWINGS

Fig. 1 shows a diagram that indicates a configuration of a device control system in Embodiment 1 of the present invention;
Fig. 2 shows a block diagram that indicates an electronic configuration of the control target device 1 and the controller 2 shown in Fig. 1;
Fig. 3 shows a block diagram that indicates a configuration of processing units formed in the controller 2 shown in Fig. 2;
Fig. 4 shows a flowchart that explains a behavior of the device control system in Embodiment 1;
Fig. 5 shows a diagram that indicates a configuration of a device control system in Embodiment 2 of the present invention;
Fig. 6 shows a flowchart that explains a behavior of the device control system in Embodiment 2;
Fig. 7 shows a perspective view diagram that indicates a control target device 1 in a device control system in Embodiment 3 of the present invention;
Fig. 8 shows a diagram that explains a simulation in the device control system in Embodiment 3 of the present invention;
Fig. 9 shows a perspective view diagram that indicates another example of an environmental domain ENV in Embodiment 3;
Fig. 10 shows a perspective view diagram that indicates a control target device 1 in a device control system in Embodiment 4 of the present invention;
Fig. 11 shows a diagram that explains an example of a simulation in the device control system in Embodiment 4 of the present invention;
Fig. 12 shows a diagram that explains another example of a simulation in the device control system in Embodiment 4 of the present invention;
Fig. 13 shows a perspective view diagram that indicates a control target device 1 in a device control system in Embodiment 5 of the present invention;
Fig. 14 shows a diagram that explains a simulation in the device control system in Embodiment 5 of the present invention;
Fig. 15 shows a perspective view diagram that indicates a control target device 1 in a device control system in Embodiment 6 of the present invention;
Fig. 16 shows a diagram that explains a simulation in the device control system in Embodiment 6 of the present invention; and
Fig. 17 shows a diagram that explains a simulation of another autonomous action object in the device control system in Embodiment 6 of the present invention.

### DETAILED DESCRIPTION

Hereinafter, embodiments according to aspects of the present invention will be explained with reference to a drawing.

### Embodiment 1.

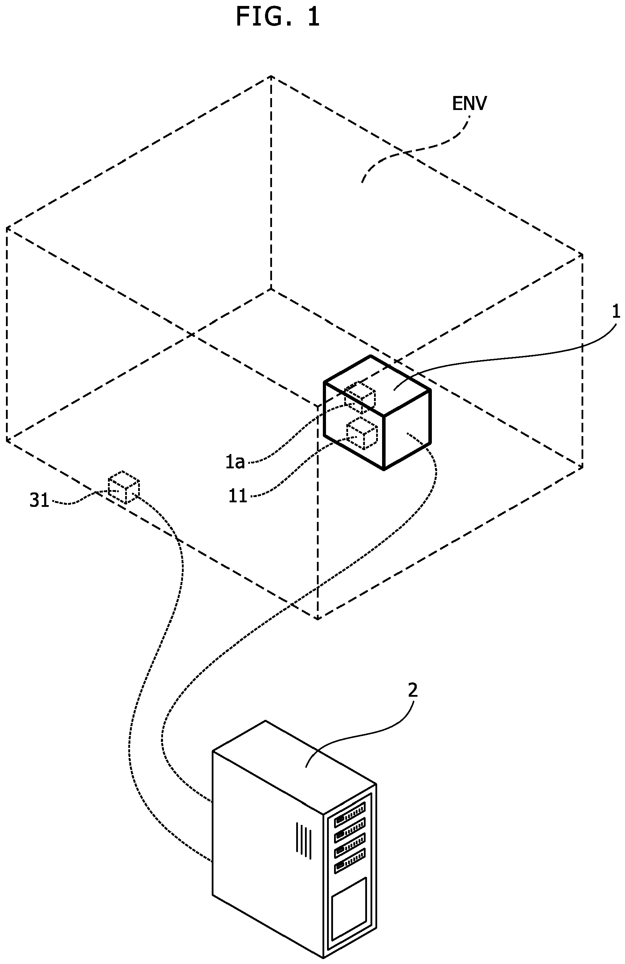

Fig. 1 shows a diagram that indicates a configuration of a device control system in Embodiment 1 of the present invention. The device control system shown in Fig. 1 includes a control target device 1 and a controller 2.

The control target device 1 includes an action unit 1a that performs sorts of actions, and the control target device 1 is (a) an object that is fixed in an environmental domain ENV and drives the action unit 1a on the basis of electronic control (a motion object that has a movable structure at least in part, a system that controls electric equipment, or the like) or (b) an object that moves in an environmental domain ENV and drives the action unit 1a on the basis of electronic control (i.e. moving object).

The environmental domain ENV is a space in which the control target device 1 exists, and here of which a size and/or shape is set in advance. The environmental domain ENV may be stationary or may move. For example, if the control target device 1 is a moving object, the environmental domain 1 may be moved in accordance with movement of the control target device 1, or may be stationary regardless of movement of the control target device 1.

In Fig. 1, for simple explanation, the control target device 1, the environmental domain ENV, and the like are expressed as cubes, but shapes and sizes of them are not limited. For example, the environmental domain ENV may be a part of a domain included by a visual field of a predetermined camera (e.g. a part within a predetermined distance from the camera).

Further, the device control system shown in Fig. 1 includes a sensor unit 11 arranged in the control target device 1 and a sensor unit 31 arranged in the environmental domain ENV (in the outside of the control target device 1). The sensor unit 11 or 31 includes one or plural sensors, a signal processing circuit, a communication circuit and the like, and measures a specific physical quantity (a physical quantity that can be directly or indirectly used for controlling the control target device 1) using the one or plural sensors and outputs a real sensor signal corresponding to the measured physical quantity using the signal processing circuit, the communication circuit and the like.

Further, the controller 2 is an electronic device that controls the control target device 1 on the basis of the real sensor signal of the sensor unit 11 and/or the real sensor signal of the sensor units 31. The controller 2 may be arranged in the outside of the control target device 1 or may be arranged in the inside of the control target device 1. If the controller 2 is arranged in the outside of the control target device 1, data communication circuits of a predetermined communication standard are installed in the controller 2 and the control target device 1 so as to enable wireless or wired data communication between the controller 2 and the control target device 1.

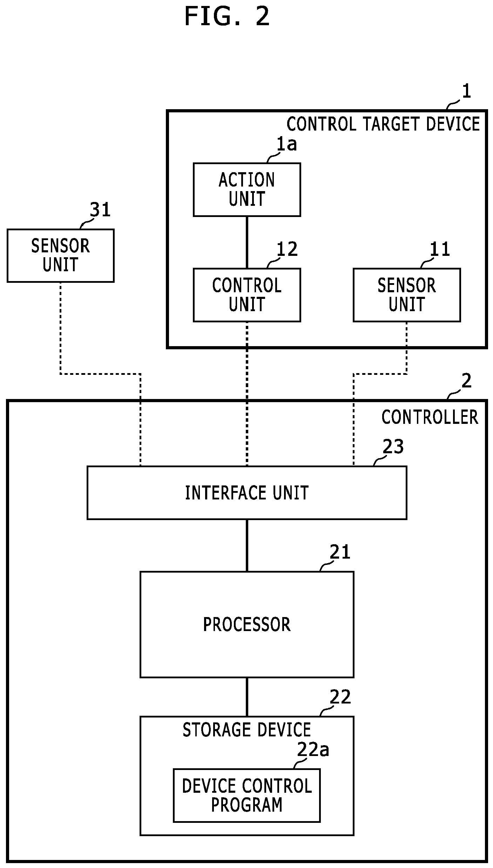

Fig. 2 shows a block diagram that indicates an electronic configuration of the control target device 1 and the controller 2 shown in Fig. 1.

As shown in Fig. 2, the control target device 1 includes the aforementioned action unit 1a, the aforementioned sensor unit 11, and a control unit 12.

The action unit 1a is (a) an internal device that takes a mechanical motion using electric power (e.g. motor, actuator or the like), (b) an internal device that performs an electric action that emits light, sound, heat, and/or the like to the environmental domain ENV without a mechanical motion and thereby affects the environmental domain ENV (e.g. lighting, heat source, sound outputting device or the like), or the like. The control unit 12 is an electronic circuit that electrically controls the action unit 1a in accordance with a control signal received from the controller 2.

The sensor unit 11 may transmit the real sensor signal directly to the controller 2 as shown in Fig. 2, or the controller 12 may receive the real sensor signal from the sensor unit 11 and transmit it to the controller 2.

Further, as shown in Fig. 2, the controller 2 includes a processor 21, a storage device 22, and an interface unit 23.

The processor 21 is a computer that includes a CPU (Central Processing Unit), a ROM (Read Only Memory), a RAM (Random Access Memory) and the like, loads a program from the ROM, the storage device 22 or the like to the RAM, and executes the program with the CPU and thereby acts as various processing units. The processor may include a specific-purpose calculation circuit such as specific-purpose accelerator chip or GPU (Graphics Processing Unit) to perform a computational process in a simulation mentioned below at a high speed.

The storage device 22 is a non-volatile storage device such as flash memory or hard disk drive, and stores data, a program and the like required for a process mentioned below. In the storage device 22, a device control program 22a has been stored. The device control program 22a may be stored in a non-transitory portable computer readable recording medium (e.g. Compact Disk or the like) and may be installed from the recording medium to the storage device 22.

The interface unit 23 is an electronic circuit that establishes a connection with the control target device 1 (specifically, the sensor unit 11, the control unit 12, or the like), the sensor unit 31, and the like (i.e. transmits the control signal, receives the real sensor signal, and the like). If the controller 2 is arranged in the outside of the control target device 1, the interface unit 23 includes the aforementioned data communication circuit (peripheral device interface, network interface, or the like). If the external sensor unit 31 is installed, the interface unit 23 performs wireless or wired data communication for the real sensor signal using the data communication circuit. Further, if the controller 2 is built in the control target device 1, the interface unit 23 includes an I/O (Input/Output) circuit of the controller 2, for example.

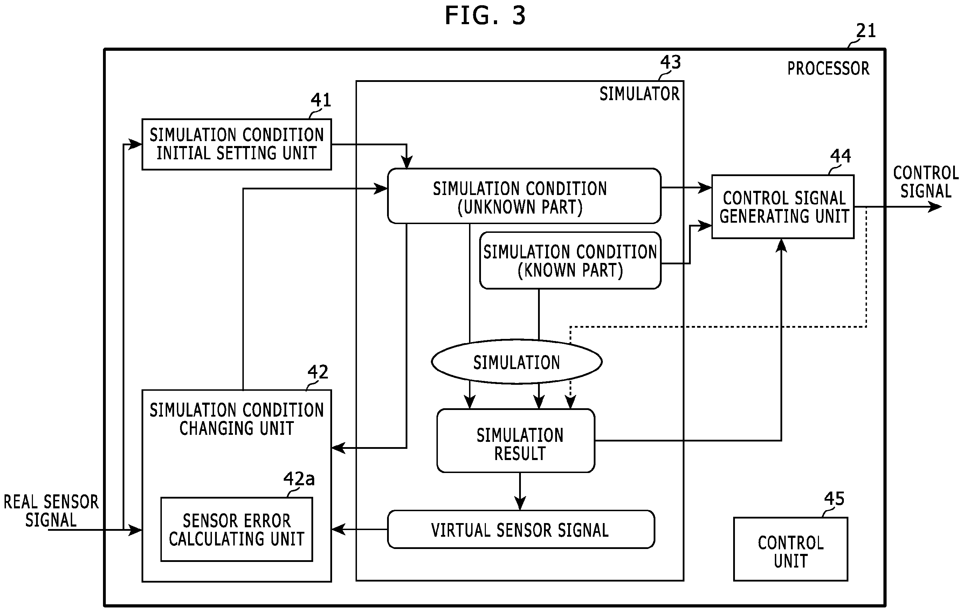

Fig. 3 shows a block diagram that indicates a configuration of processing units formed in the controller 2 shown in Fig. 2. In the controller 2, the processor 21 executes the device control program 22a and thereby acts as a simulation condition initial setting unit 41, a simulation condition changing unit 42, a simulator 43, a control signal generating unit 44, and a control unit 45.

The simulation condition initial setting unit 41 derives an initial value of a simulation condition (an unknown part, mentioned below) from the real sensor signal.

For example, the simulation condition initial setting unit 41 includes a machine-learned deep neural network (hereinafter, called "DNN"), and derives one or plural initial values of one or plural items of status information as the simulation condition (an unknown part) using the machine-learned DNN such that the one or plural initial values correspond(s) to values of plural real sensor signals. Specifically, the initial value(s) of the simulation condition is/are obtained by (a) setting the values of the real sensor signals as input values of the machine-learned DNN and (b) performing a computational process of the machine-learned DNN.

It should be noted that machine learning of the DNN in the simulation condition initial setting unit 41 is performed with plural training data sets, and each training data set is obtained in an experiment, as a combination of (a) values of the actual real sensor signals and (b) one or plural measurement values of the simulation condition (or one or plural values obtained using a predetermined model).

Further, for example, if the simulation is performed iteratively for generating the control signal at each time step in a time series, an initial value set (i.e. one or plural initial values) of the simulation condition (unknown part) at a certain time step may be set as one or plural values estimated on the basis of one or plural value sets of the simulation condition (unknown part) finally determined at one or plural past time steps.

The simulation condition changing unit 42 changes the simulation condition of the simulator 43 on the basis of the real sensor signal and a corresponding virtual sensor signal (mentioned below).

As shown in Fig. 3, the simulation condition is one or plural constraint condition values required for a computational process of the simulation, and includes (a) a known condition that includes a fixedly preset condition, a condition directly detected by the sensor unit 11 or 31, and/or the like (hereinafter, called "known part"), and (b) an unknown condition other than the known condition (hereinafter, called "unknown part").

The simulation condition changing unit 42 changes the unknown part of the simulation condition but does not change the known part of the simulation condition.

In this embodiment, the simulation condition changing unit 42 includes a sensor error calculating unit 42a, and sets and changes the simulation condition of the simulator 43 on the basis of a sensor error between the real sensor signal and a corresponding virtual sensor signal (mentioned below). The sensor error calculating unit 42a calculates as the sensor error an error between the real sensor signal of the sensor unit 11 or 31 and a corresponding virtual sensor signal (mentioned below). It should be noted that the number of sensors in the sensor unit 11 or 31 is not limited, and the number of the real sensor signals are identical to the number of the sensors in the sensor unit 11 or 31, and that is one or a plural number.

For example, the simulation condition changing unit 42 includes a machine-learned DNN, and derives the simulation condition (unknown part) (or a correction amount for this simulation condition) using the machine-learned DNN such that the simulation condition (or the correction amount) corresponds to values of sensor errors corresponding to plural real sensor signals. Specifically, one or plural values of the simulation condition is/are obtained by (a) setting the values of the sensor errors as input values of the machine-learned DNN and (b) performing a computational process of the machine-learned DNN. Further, for example, one or plural values of the simulation condition may be obtained by using the real sensor signals and the virtual sensor signals as input values of the machine-learned DNN, instead of the sensor errors. Here, one or plural current values (i.e. one or plural values before the change) of the simulation condition may be added as input values of the machine-learned DNN.

Machine learning of the DNN in the simulation condition changing unit 42 is performed with plural training data sets. If the sensor errors are used as input of the DNN, each training data set is obtained in an experiment using actual values of the real sensor signals and pairs of a simulation condition and virtual sensor signals, as a combination of (a) errors arbitrarily specified for the values of the real sensor signals (i.e. errors between actual values of the real sensor signals and arbitrary values of the virtual sensor signals) and (b) one or plural values of the simulation condition (or the correction amount) corresponding to the arbitrary values of the virtual sensor signals. Further, if the real sensor signals and the virtual sensor signals are used as input of the DNN, each training data set is obtained in an experiment using actual values of the real sensor signals and pairs of a simulation condition and virtual sensor signals so as to (a) derive values of the virtual sensor signals by adding arbitrary errors to the actual values of the real sensor signals, (b) determine one or plural values of the simulation condition (or the correction amount) corresponding to the derived values of the virtual sensor signals, and (c) obtain the training data set as a combination of (c1) the values of the real sensor signal and the virtual sensor signal and (c2) the aforementioned one or plural values of the simulation condition.

The simulator 43 (a) performs a simulation (physical simulation or the like) of a specific phenomenon in the environmental domain ENV under a simulation condition that is set as specific status information of the control target device 1 and/or the environmental domain ENV and thereby derives a simulation result, and (b) virtually measures the specific physical quantity on the basis of the simulation result and thereby generates a virtual sensor signal corresponding to the real sensor signal. Specifically, a phenomenon obtained as the simulation result is measured using a virtual sensor that simulates each (real) sensor in the sensor unit 11 or 31 (i.e. simulates an arrangement and a specification of the sensor in the sensor unit 11 or 31), and a value obtained in the virtual measurement is determined as the virtual sensor signal.

The specific status information used as the simulation condition may be a continuous variable or may be a discrete variable such as class (indicating a classified group).

The control signal generating unit 44 generates a control signal for the control target device 1 from the aforementioned simulation condition (i.e. the aforementioned known part and the aforementioned unknown part; as the unknown part, using finally determined values of the specific status information obtained in the iterative computation).

For example, the control signal generating unit 44 generates a control signal for the control target device 1 from values of the specific status information as the simulation condition using a predetermined computational model, an expert system (a system that estimates a proper solution with an inference engine based on a rule base and/or a knowledge base), or the like.

The control unit 45 conducts and controls acquiring the real sensor signal, performing the aforementioned simulation, outputting the control signal, and the like. Further, iteratively until the sensor error is converged as mentioned, the control unit 45 (a) causes the simulator 43 to perform the simulation and the generation of the virtual sensor signal and (b) causes the simulation condition changing unit 42 to perform the change of the simulation condition.

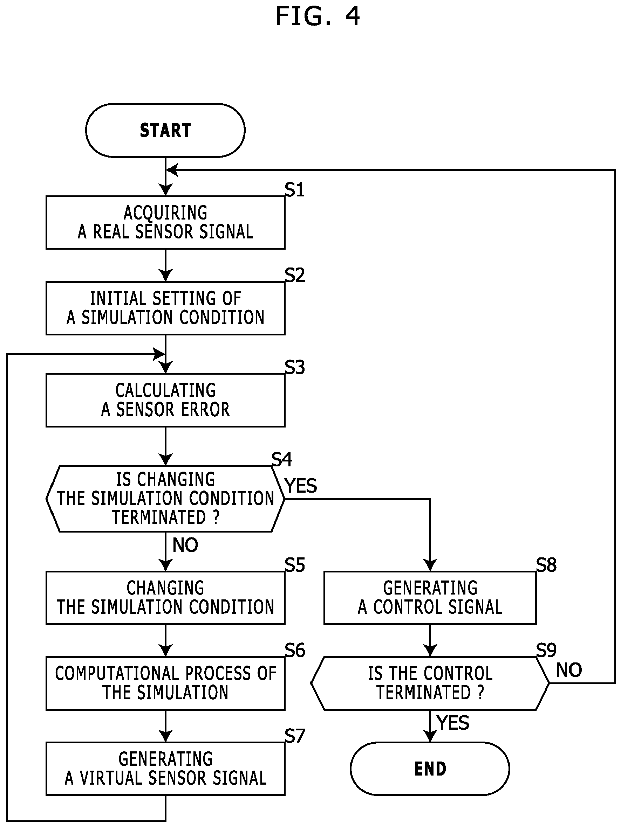

The following part explains a behavior of the device control system in Embodiment 1. Fig. 4 shows a flowchart that explains a behavior of the device control system in Embodiment 1.

In accordance with a predetermined user operation inputted through a user interface (not shown), the control unit 45 starts operation of this device control system, and sets a known part of the simulation condition to the simulator 43. This known part is data obtained from (a) the real sensor signal of the sensor unit 11 and/or the real sensor signal of the sensor unit 31, (b) data prepared and stored in the storage device 22, and/or the like.

The control unit 45 firstly acquires a real sensor signal from the sensor unit 11 and/or a real sensor signal from the sensor unit 31 at a certain time step (in Step S1), and the simulation condition initial setting unit 41 determines one or plural initial values of the simulation condition on the basis of the acquired real sensor signal(s), and sets the determined one or plural initial values of the simulation condition to the simulator 43 (in Step S2). Subsequently, the simulator 43 performs a computational process of a predetermined simulation on the basis of (a) the initial value(s) of the simulation condition (unknown part) and (b) the simulation condition (known part), and thereby derives an initial value of a virtual sensor signal.

Subsequently, the sensor error calculating unit 42a calculates as a sensor error a difference between the acquired real sensor signal and the current virtual sensor signal (in Step S3).

Subsequently, the control unit 45 determines whether this sensor error satisfies a predetermined determination (conversion) condition or not (in Step S4); and if this sensor error satisfies the condition, then terminates the iterative change of the simulation condition, and otherwise if not, causes to perform the change of the simulation condition mentioned below. For example, this determination condition is that a total or an average of squares of the sensor errors corresponding to all the real sensor signals gets less than a predetermined threshold value. Therefore, when the simulation condition gets to be proper and consequently the virtual sensor signals gets sufficiently close to the real sensor signals, the iterative change of the simulation condition is terminated.

If the sensor error does not satisfy the aforementioned conversion condition, then the simulation condition changing unit 42 calculates a correction amount for each value of the simulation condition (or each value of the simulation condition after the change) using the DNN so as to set as input of the DNN the sensor errors of all the real sensor signals, and changes the simulation condition (unknown part) in accordance with this calculation result (i.e. with the calculated correction amount, or the value of the simulation condition after the change) (in Step S5).

Every time that the simulation condition is changed, the simulator 43 performs a computational process of the aforementioned simulation (in Step S6), and newly generates a virtual sensor signal on the basis of a result of the simulation (in Step S7).

Subsequently, returning to Step S3, the sensor error calculating unit 42a derives a sensor error between the newly generated virtual sensor signal and the already acquired real sensor signal. Afterward, as mentioned, until the sensor error satisfies the aforementioned determination condition, iteratively performed are the change of the simulation condition, the simulation, the generation of the virtual sensor signal, and the calculation of the sensor error (in Steps S3 to S7).

Contrarily, if the sensor error satisfies the aforementioned determination condition, then the control unit 45 finally determines a value of the simulation condition at this time, and the control signal generating unit 44 generates a control signal on the basis of (a) the finally determined simulation condition and/or (b) the simulation result corresponding to the finally determined simulation condition, and outputs the control signal to the control target device 1 (in Step S8).

For example, if the control target device 1 is a motion object that takes a mechanical action, the control signal generating unit 44 performs attitude control, path planning and/or the like for the motion object on the basis of the aforementioned simulation condition and/or the aforementioned simulation result.

For example, if the control target device 1 as the motion object is a manned or unmanned flying object (i.e. a sort of moving objects; e.g. drone, helicopter, airplane, aerocar, or the like), or an on-surface moving object (i.e. an automobile on a ground surface, a ship on a sea surface, or the like), the control signal generating unit 44 (a) performs path planning for the moving object, generates a control signal corresponding to a path obtained in the path planning, and outputs this control signal to the control target device 1, and/or (b) performs attitude control for the moving object using the control signal, on the basis of the aforementioned simulation condition and/or the aforementioned simulation result.

For example, if the control target device 1 as a motion object is a workrobot, the control signal generating unit 44 (a) performs motion path planning for a movable part of the workrobot, generates a control signal corresponding to a motion path obtained in the motion path planning, and outputs this control signal to the control target device 1, and/or (b) performs attitude control for the workrobot using the control signal, on the basis of the aforementioned simulation condition and/or the aforementioned simulation result.

Afterward, the control unit 45 determines whether the control for operation of the control target device 1 should be terminated or not in accordance with a user operation inputted to a user interface (not shown) (in Step S9); and if it is determined that the control should be terminated, terminates the control of the control target device 1; and otherwise if it is determined that the control should not be terminated, returning to Step S1, acquires a real sensor signal at a next time point (i.e. at a next time step), and causes to perform the processes in and after Step S2 likewise on the basis of the newly acquired real sensor signal and generate a control signal corresponding to this real sensor signal.

Thus, in the aforementioned manner, for the real sensor signal at a certain time point, the sensor error calculating unit 41, the simulation condition changing unit 42, and the simulator 43 iteratively perform the aforementioned change of the simulation condition and the like until the sensor error is converged with the satisfaction of the determination condition; and upon converging the sensor error, a value of the simulation condition is finally determined and the control signal is generated on the basis of the finally determined value of the simulation condition.

As mentioned, in Embodiment 1, the sensor unit 11 or 31 is arranged in either the environmental domain ENV or the control target device 1, and measures a specific physical quantity and outputs a real sensor signal corresponding to the measured physical quantity. The controller 2 controls the control target device 1 on the basis of the real sensor signal. Further, the controller 2 includes the simulator 43 and the simulation condition changing unit 42, and the control signal generating unit 44. The simulator 43 (a) performs a simulation of a specific phenomenon in the environmental domain ENV under a simulation condition that is set as specific status information of the control target device 1 and/or the environmental domain ENV and thereby derives a simulation result, and (b) virtually measures the specific physical quantity on the basis of the simulation result and thereby generates a virtual sensor signal corresponding to the real sensor signal; the simulation condition changing unit 42 changes the simulation condition on the basis of the real sensor signal and the virtual sensor signal; and the control signal generating unit 44 generates a control signal for the control target device 1 on the basis of the simulation condition and/or the simulation result. Furthermore, iteratively until a sensor error between the real sensor signal and the virtual sensor signal is converged, (a) the simulator 43 performs the simulation and the generation of the virtual sensor signal and (b) the simulation condition changing unit 42 performs the change of the simulation condition.

Consequently, on the basis of a feedback loop of the simulation as mentioned, a finally determined value of the simulation condition is obtained in a status that the simulation result gets sufficiently close to a real world, and therefore, the control target device 1 is properly controlled on the basis of the status information as the finally determined value of the simulation condition.

### Embodiment 2.

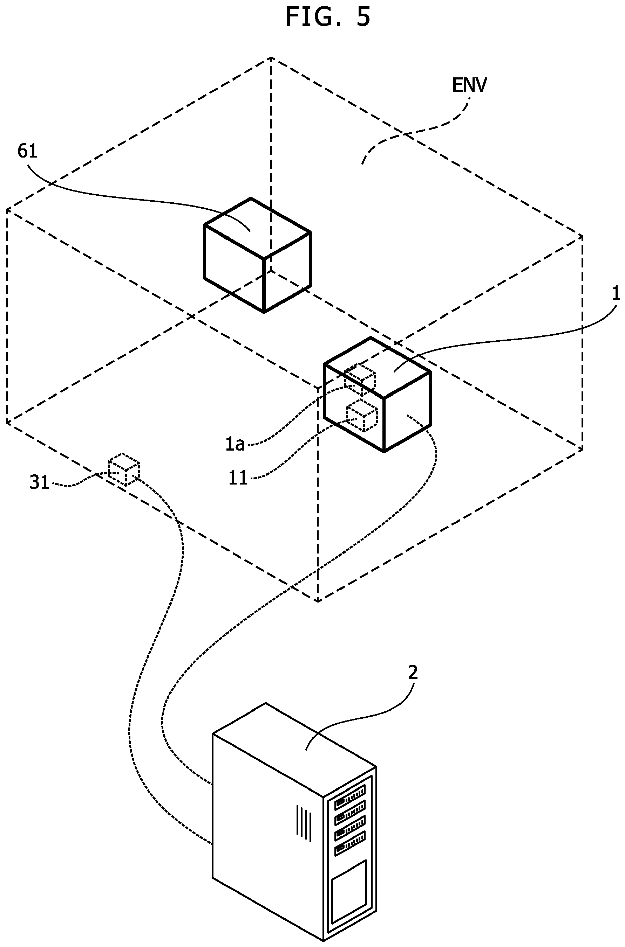

Fig. 5 shows a diagram that indicates a configuration of a device control system in Embodiment 2 of the present invention. As shown in Fig. 5, in the device control system in Embodiment 2, if another autonomous action object 61 (i.e. an object that autonomously takes an action not under the control performed by the controller 2) other than the control target device 1 exists in the environmental domain ENV, intention inference of this another autonomous action object 61 is performed, and the control signal for the control target device 1 is generated with taking into account a result of the intention inference.

Specifically, in a process that the control signal generating unit 44 generates a control signal from the simulation condition in accordance with a predetermined control model (i.e. the aforementioned computational model, the aforementioned expert system, or the like) and thereby decides an action of the control target device 1, in Embodiment 2, if another autonomous action object 61 exists in the environmental domain ENV, then the control signal generating unit 44 (a) estimates an action of the autonomous action object 61 under an assumption that the autonomous action object 61 decides the action of the autonomous action object 61 itself on the basis of a control model identical to the control model of the control target device 1, and (b) generates the control signal for the control target device 1 with taking into account the estimated action of the autonomous action object 61.

Specifically, the control signal generating unit 44 (a) estimates a value (equivalent to such a simulation condition on the autonomous action object 61) of status information of the autonomous action object 61 from the real sensor signal of the sensor unit 11 or 31, the finally determined simulation condition, the corresponding simulation result, and the like, (b) predicts an action of the autonomous action object 61 using the control model from the estimated value of the status information, and (c) generates a control signal that results in an action of the control target object 1 for the control target device 1 with taking into account the predicted action of the autonomous action object 61 so as to avoid conflict (physical collision or the like) with the autonomous action object 61.

In this process, if the autonomous action object 61 is an object of a same type as the control target device 1, the control signal generating unit 44 may (a) cause the simulator 43 to perform a simulation under a simulation condition that is set as the status information of the autonomous action object 61, as well as for the control target device 1, and thereby derive a simulation result, and (b) predict an action of the autonomous action object 61 using the aforementioned control model on the basis of this simulation condition and/or the corresponding simulation result.

If the autonomous action object 61 is an object of a different type from the control target device 1, the control signal generating unit 44 may (a) estimate a value of the status information corresponding to the type of the autonomous action object 61 from the real sensor signal, the finally determined simulation condition, the corresponding simulation result, and the like, (b) cause the simulator 43 to perform a simulation corresponding to the type of the autonomous action object 61 under a simulation condition that is set as the status information of the autonomous action object 61, as well as for the control target device 1, and thereby derive a simulation result, and (c) predict an action of the autonomous action object 61 using the aforementioned control model on the basis of this simulation condition and/or the corresponding simulation result.

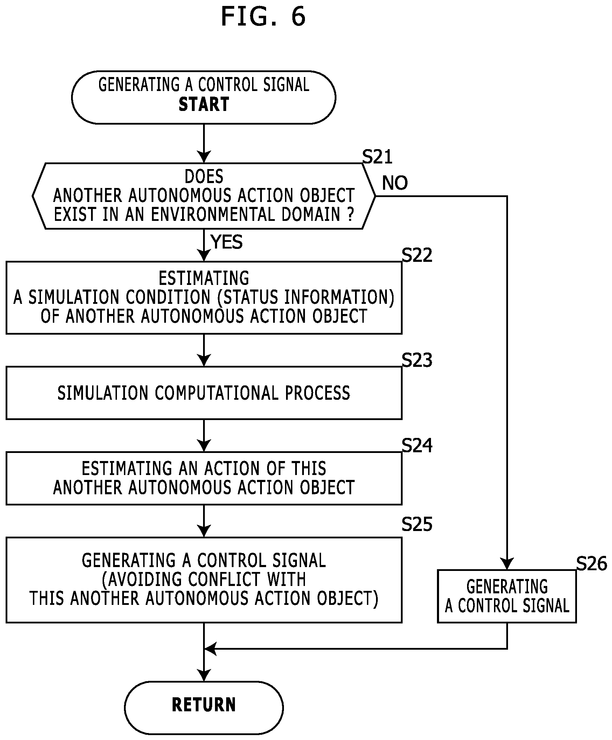

The following part explains a behavior of the device control system in Embodiment 2. Fig. 6 shows a flowchart that explains a behavior of the device control system in Embodiment 2.

In Embodiment, 2 the control signal generating unit 44 performs a process shown in Fig. 6 and thereby generates a control signal for the control target device 1.

In Embodiment 2, after the simulation condition is finally determined as well as in Embodiment 1, the control signal generating unit 44 determines whether another autonomous action object 61 exists in the environmental domain ENV or not (in Step S21).

For example, on the basis of the real sensor signal (for example, a visible photographed image signal obtained from a camera and/or a depth image signal obtained from a LiDAR (Laser Imaging Detection and Ranging) / RADAR sensor, in the sensor unit 11 or 31), the control signal generating unit 44 determines whether another autonomous action object 61 exists in the environmental domain ENV or not. In this process, the control signal generating unit 44 may also determine a type of the autonomous action object 61.

If it is determined that another autonomous action object 61 exists in the environmental domain ENV, then the control signal generating unit 44 estimates status information of this autonomous action object 61 on the basis of the real sensor signal of the sensor unit 11 or 31, the aforementioned simulation condition, the aforementioned simulation result, and the like (in Step S22).

Subsequently, the control signal generating unit 44 causes the simulator 43 to perform a simulation under a simulation condition that is set as the estimated status information (in Step S23), estimates an action of the autonomous action object 61 on the basis of the simulation condition for the autonomous action object 61 and/or the corresponding simulation result (in Step S24), and generates a control signal for the control target device 1 with taking into account the estimated action of the autonomous action object 61 (in Step S25).

Contrarily, if it is determined that another autonomous action object 61 does not exist in the environmental domain ENV, then the control signal generating unit 44 generates a control signal as well as in Embodiment 1 (in Step S26).

Other parts of the configuration and the behavior of the device control system in Embodiment 2 are identical or similar to those in Embodiment 1, and therefore, not explained here.

As mentioned, in Embodiment 2, if another autonomous action object 61 exists in the environmental domain ENV, then the control signal generating unit 44 (a) estimates an action of the autonomous action object 61 under an assumption that the autonomous action object 61 decides the action of the autonomous action object 61 on the basis of a control model identical to the control model of the control target device 1, and (b) generates the control signal for the control target device 1 with taking into account the estimated action of the autonomous action object 61.

Consequently, the control target device 1 is properly controlled with taking into account an action of another autonomous action object 61.

### Embodiment 3.

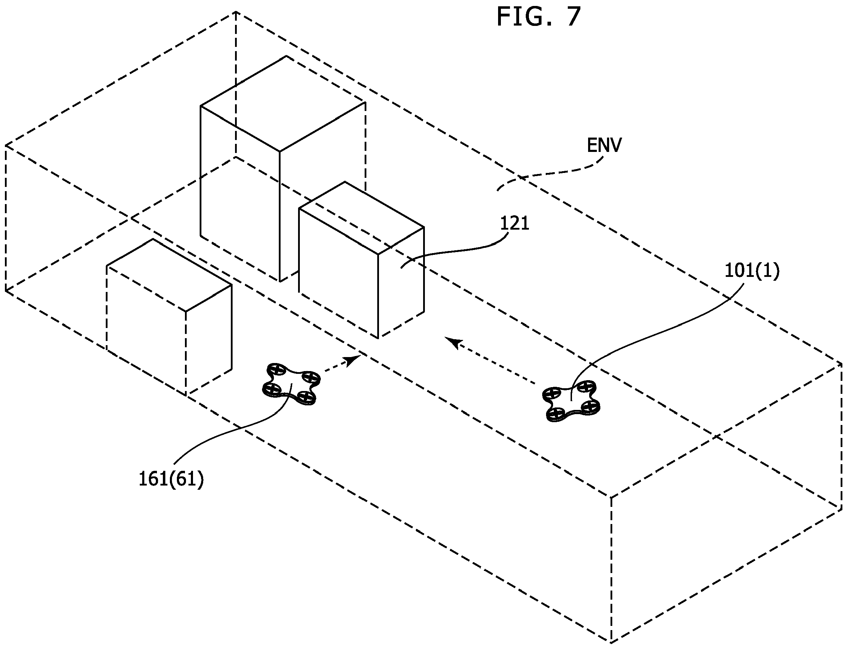

A device control system in Embodiment 3 is a specific example of the device control system described in Embodiment 1 or 2. Fig. 7 shows a perspective view diagram that indicates a control target device 1 in a device control system in Embodiment 3 of the present invention. In Embodiment 3, the control target device 1 is a flying object 101 such as airplane, helicopter, drone, aerocar, or the like. The flying object 101 may be a manned flying object or may be an unmanned flying object. The flying object 101 may be an autonomously driven flying object or may be a semi-autonomously driven flying object that allows manual driving by a pilot (a driver).

In Embodiment 3, the sensor unit 11 or 31 includes (a) a wind speed meter and a wind pressure meter, and/or (b) a camera that includes an imaging sensor such as CCD (Charge-Coupled Device) or CMOS image sensor. This camera photographs a part (for example, a movement direction part, i.e. a part in front of the flying object 101 along a movement direction of the flying object 101) or all of the environmental domain ENV. Specifically, in Embodiment 3, the sensor unit 11 includes (a) a body-equipped wind speed meter and a body-equipped wind pressure meter that are installed in/on a body of the flying object 101, (b) a camera that includes an imaging sensor, (c) a LiDAR or RADAR sensor that generates a depth image in a predetermined visual field in a movement direction of the flying object 101, (d) a position detecting sensor (e.g. GPS (Global Positioning System) sensor) that detects a current position of the flying object 101, (e) a rotor tachometer, and (f) a gyro sensor that detects a current direction of the flying object 101; and the external sensor unit 31 includes a wind speed meter and a wind pressure meter that are installed on a construction 121 or the like. For example, as the body-equipped wind speed meter, a hot-film wind speed meter is used.

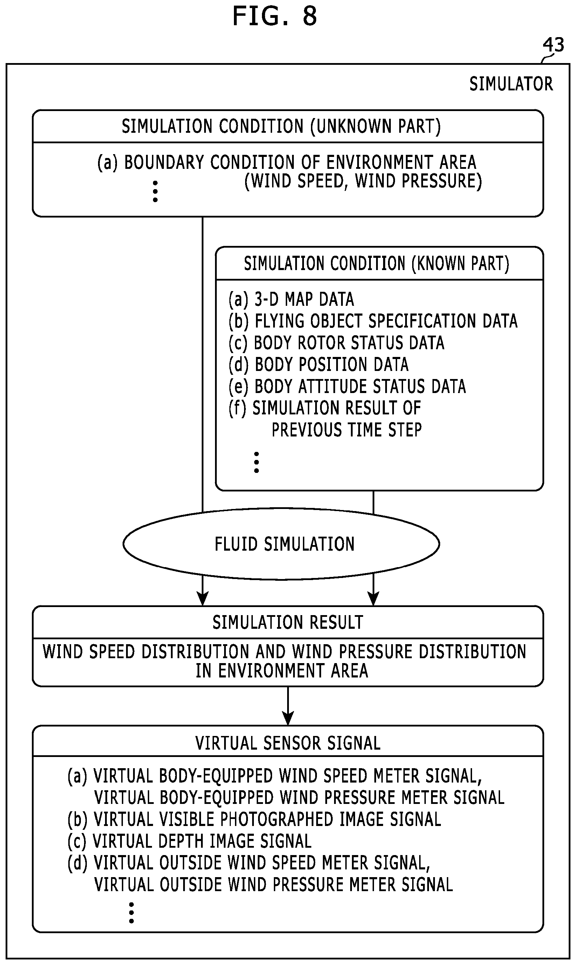

Fig. 8 shows a diagram that explains a simulation in the device control system in Embodiment 3 of the present invention.

In Embodiment 3, the simulator 43 performs a fluid simulation in the environmental domain ENV. In this process, a fluid numerical analysis is performed in accordance with (a) a finite element method, a boundary element method, a difference method or the like so as to set fluid in the environmental domain ENV as air and set a governing equation as a Navier-Stokes equation, (b) a particle method or the like, and thereby a wind speed distribution and a wind pressure distribution in the environmental domain ENV are obtained corresponding to a simulation condition (a boundary condition of the environmental domain ENV and/or the like) set as shown in Fig. 8, for example. The flying object 101 includes a rotor, and rotation of the rotor causes air flow in a predetermined local domain in a periphery of the flying object 101 (or in a periphery of the rotor); and therefore, in this process, this air flow is also analyzed together, and consequently, the wind speed distribution and the wind pressure distribution in the environmental domain ENV (in particular, in a neighborhood of the flying object 101) are obtained with taking into account the rotation of the rotor.

If a finite element method or the like is used as mentioned, the environmental domain ENV is divided as a mesh, and the wind speed distribution and the wind pressure distribution are discretely calculated. Here, a mesh in a domain other than the local domain within the environmental domain ENV may be coarser than a mesh in the local domain. For example, the aforementioned fluid numerical analysis may be performed using a mesh that has different mesh roughness in part, and such a mesh may be formed by combining a mesh of the local domain and a mesh of the whole environmental domain ENV.

In Embodiment 3, the known part of the simulation condition is data prepared in advance and/or data directly measured by the sensor, and here includes a three-dimensional map of the environmental domain ENV (a shape data of the environmental domain ENV and the construction 121 in the environmental domain ENV), specification data of the flying object 101 (a shape and a strength of propulsive force of the flying object 101), body rotor status data (the number of rotation per unit time, or the like) (if the flying object 101 includes a rotor), body attitude status data (a direction of a nose, a pitch, a yaw and the like of the flying object 101), a body position data, and the like; and the unknown part of the simulation condition is data that dynamically changes and is not directly measured by the sensor, and here includes a boundary condition (i.e. a wind speed and a wind pressure at each position on a boundary) of the environmental domain ENV.

Regarding the boundary condition, in order to reduce the number of freedom, it may be assumed that the boundary condition (wind speed and wind pressure) is constant within each of outside boundary surfaces of the environmental domain ENV. In such a case, the number of freedom is a product of (a) the number of the boundary surfaces and (b) the number of physical quantities in the boundary condition (wind speed, wind pressure, and the like).

If the fluid simulation takes into account timewise variation of the fluid, for example, the known part of the simulation condition includes the simulation result (i.e. the wind speed distribution and the wind pressure distribution in the environmental domain ENV) obtained for a time step previous to a current time step by one time step, and the fluid simulation for the current time step is performed on the basis of the wind speed distribution and the wind pressure distribution in the environmental domain ENV.

If there is not the simulation result obtained for the previous time step, for example, on the basis of the set boundary condition, then the fluid simulation is advanced along a time series until the wind speed distribution and the wind pressure distribution get to be stable, and the wind speed distribution and the wind pressure distribution that have been stable are used as the aforementioned simulation result obtained for the previous time step (the wind speed distribution and the wind pressure distribution in the environmental domain ENV).

Further, in Embodiment 3, a virtual body-equipped wind speed meter signal, a virtual body-equipped wind pressure meter signal, a virtual visible photographed image signal, a virtual depth image signal, a virtual outside wind speed meter signal, and a virtual outside wind pressure meter signal are generated as virtual sensor signals corresponding to the body-equipped wind speed meter and the body-equipped wind pressure meter, the camera, a LiDAR or RADAR sensor in the sensor unit 11 and an outside wind speed meter and an outside wind pressure meter in the sensor unit 31.

The virtual body-equipped wind speed meter signal, the virtual body-equipped wind pressure meter signal, the virtual outside wind speed meter signal, and the virtual outside wind pressure meter signal are derived from the wind speed distribution and the wind pressure distribution as the simulation result on the basis of the specifications of the sensor units 11 and 31 (i.e. the body-equipped wind speed meter, the body-equipped wind pressure meter, the outside wind speed meter, and the outside wind pressure meter). The virtual visible photographed image signal is obtained, for example, by (a) determining a visual field of the camera from a current position and a direction of the camera (i.e. the flying object 101) on the basis of a specification (focal distance and/or the like) of the camera and (b) determining an image of the construction 121 and the like entering in the camera's visual field on the basis of the three-dimensional map data. The virtual depth image signal is obtained, for example, by determining a distance to an object in a sensing field of the LiDAR/RADAR sensor from a current position and a direction of the LiDAR/RADAR sensor (i.e. the flying object 101) on the basis of the current position and the three-dimensional map data. It should be noted that regarding an image signal as the real sensor signal or the virtual sensor signal, an image resolution may be decreased and/or some image processes may be performed (hereafter, considered likewise).

Because it is generally estimated that there is some relevancy between the wind speed and pressure and the boundary condition at a certain measurement position, it is expected that the boundary condition as the simulation condition is gradually corrected on the basis of sensor errors of the wind speed and pressure at the measurement position, with the machine-learned DNN of the aforementioned simulation condition changing unit 42.

Further, a typical cloud state (a shape, a color, and the like of cloud) appears when an updraft or a downdraft occurs, and therefore, it is generally estimated that there is some relevancy between a cloud status in the visible photographed image and the boundary condition (the boundary condition at a position where such cloud exists). Therefore, it is expected that the boundary condition as the simulation condition is gradually corrected on the basis of a sensor error of the visible photographed image at the measurement position, with the machine-learned DNN of the aforementioned simulation condition changing unit 42.

The following part explains a behavior of the device control system in Embodiment 3.

In Embodiment 3, the controller 2 acquires the real sensor signals from the aforementioned sensor units 11 and 31, iteratively performs the change of the simulation condition (unknown part), the fluid simulation, the generation of the virtual sensor signals, and the calculation of the sensor errors until the sensor errors are converged, and finally determines a value of the simulation condition.

After the simulation condition is finally determined, the controller 2 generates a control signal corresponding to the finally determined simulation condition, and outputs the control signal to the flying object 101.

For example, the controller 2 performs path planning and thereby determines a proper path on the basis of (a) boundary condition data in the finally determined simulation condition and (b) the wind speed distribution and the wind pressure distribution in the simulation result, generates a control signal for flying along the determined path, and supplies the control signal to the flying object 101.

For example, in the path planning, the path is selected so as to avoid the construction 121 and a bad atmosphere position (a position where an eddy, an updraft, a downdraft or the like occurs) on the basis of the boundary condition data and the simulation result.

The next part explains a case that another autonomous action object 61 described in Embodiment 2 exists in the environmental domain ENV. In this case, as described in Embodiment 2, the control signal generating unit 44 performs the intention inference of this another autonomous action object 61, and controls an action of the flying object 101 with taking into account a result of the intention inference.

Specifically, for example, as shown in Fig. 7, if a flying object 161 exists as another autonomous action object 61 in the environmental domain ENV, the controller 2 detects the flying object 161 in the environmental domain ENV on the basis of the aforementioned visual photographed image signal of the camera and/or the depth image signal. If the flying object 161 has a same type as a type of the flying object 101 (e.g. the both are drones), the control signal generating unit 44 of the controller 2 sets a boundary condition as the finally determined simulation condition to a simulation condition for the autonomous action object 61, and causes the simulator 43 to perform a fluid simulation for the autonomous action object 61 (in particular, a fluid simulation in a local domain in a periphery of the autonomous action object 61), as described in Embodiment 2.

Subsequently, the control signal generating unit 44 estimates an action of the flying object 161 (i.e. a flying path hereafter) on the basis of the result of the fluid simulation, sets a path of the flying object 101 with taking into account the estimated flying path of the flying object 161 (for example, so as to avoid a collision between the both), and generates a control signal for flying along this path.

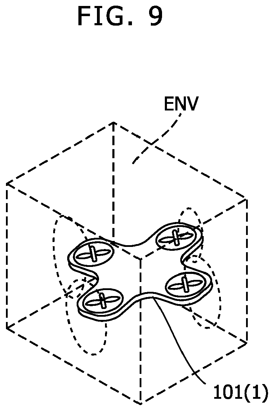

Fig. 9 shows a perspective view diagram that indicates another example of an environmental domain ENV in Embodiment 3. Further, if the control signal generating unit 44 generates a control signal for attitude control of the flying object 101, as shown in Fig. 9, the control signal generating unit 44 may (a) set the environmental domain ENV as a domain affected by an air flow created by a propulsion device (a propeller or the like) of the flying object 101, (b) perform the fluid simulation under the simulation condition that is set as a boundary condition on boundary surfaces of the domain, that is relatively near the flying object 101, (c) determine a wind on the boundary surfaces (i.e. an environmental wind not affected by an air flow created by the flying object 101), and (d) generate a control signal corresponding to a wind speed, a wind pressure, and the like of the determined environmental wind, and thereby perform the attitude control.

Other parts of the configuration and the behavior of the device control system in Embodiment 3 are identical or similar to those in Embodiment 1 or 2, and therefore, not explained here.

Regarding a position in a vertical direction (i.e. a height) in the aforementioned body position data, if the sensor unit 11 has a low position detection accuracy, a horizontal position (i.e. a latitude and a longitude) may be classified to the known part of the simulation condition, and the height may be classified to the unknown part of the simulation condition.

As mentioned, in Embodiment 3, the flying object 101 is properly controlled on the basis of the finally determined value of the simulation condition and/or the simulation result corresponding to the finally determined value of the simulation condition.

### Embodiment 4.

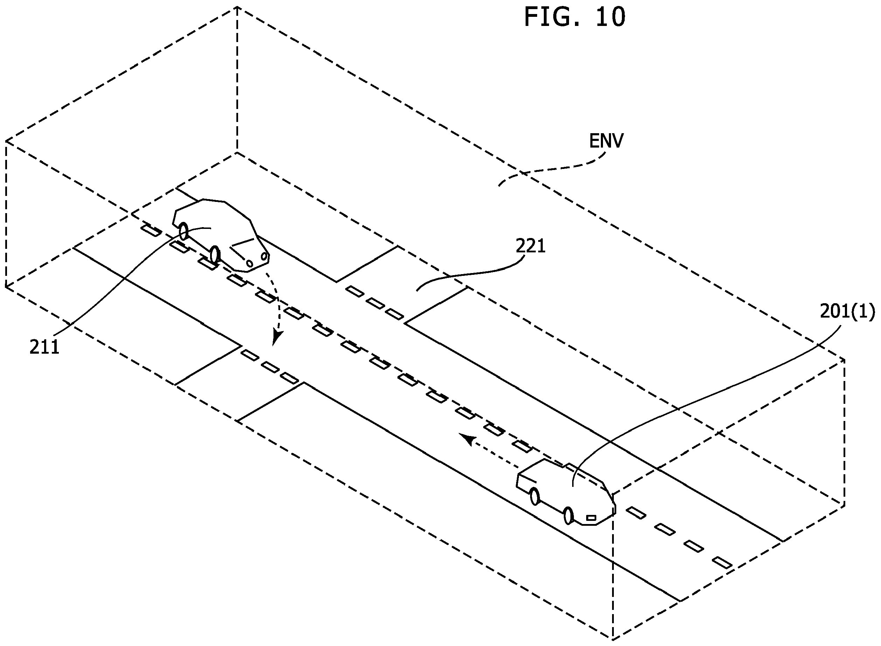

A device control system in Embodiment 4 is a specific example of the device control system described in Embodiment 1 or 2. Fig. 10 shows a perspective view diagram that indicates a control target device 1 in a device control system in Embodiment 4 of the present invention. In Embodiment 4, the control target device 1 is an on-surface moving object 201 that moves on a ground surface or a water surface, such as automobile, motorcycle, or ship. The on-surface moving object 201 shown in Fig. 10 as an example is an automobile. The aforementioned ground surface is a flat surface or a curved surface in a three-dimensional space. The on-surface moving object 201 may use power of a motor for propulsion power of the on-surface moving object 201 or may use power of a combustion engine for propulsion power of the on-surface moving object 201.

Further, in Embodiment 4, the control unit 12 of the control target device 1 has an autonomous driving function of a known autonomous driving system. In the autonomous driving function, the action unit 1a (the motor or the combustion engine) is electronically controlled so as to cause the on-surface moving object 201 to move along a target path corresponding to a peripheral environment status (a status of an oncoming car, a grounding state, and the like). Therefore, in Embodiment 4, the controller 2 recognizes the peripheral environment status and a status of this on-surface moving object 201 using the sensor units 11 and 31 in the following manner.

In Embodiment 4, the sensor units 11 and 31 include a camera that includes an imaging sensor. Specifically, in Embodiment 4, the sensor unit 11 includes (a) a camera that includes an imaging sensor, and (b) a LiDAR or RADAR sensor, as well as in Embodiment 3. The camera outputs a visible photographed image signal. The LiDAR/RADAR sensor outputs a depth image signal. If the on-surface moving object 201 is an automobile, the sensor unit 11 may include a vehicle body direction sensor such as GPS compass, a rudder angle sensor, a vehicle speed sensor that measures a vehicle speed vector (a length and a direction of a vehicle speed), a yaw rate sensor, and the like. Further, the sensor unit 11 may include a sound sensor (microphone or the like), a position detecting sensor (e.g. GPS sensor), a gyro sensor, and the like.

### (a) Behavioral simulation of an oncoming moving object

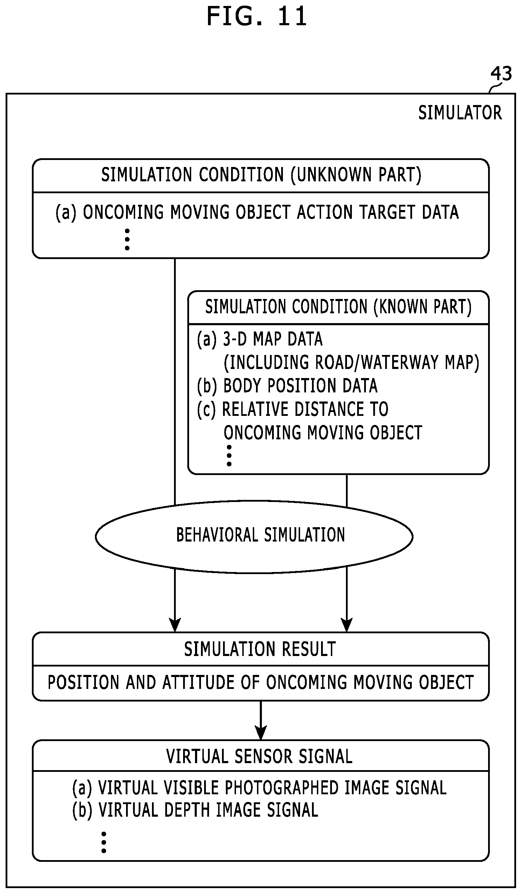

Fig. 11 shows a diagram that explains an example of a simulation in the device control system in Embodiment 4 of the present invention.

In Embodiment 4, for example, when an oncoming moving object 211 (e.g. an oncoming automobile on a road 221 or the like) in the environmental domain ENV is detected on the basis of the visible photographed image and the depth image based on the real sensor signals, the simulator 43 performs a behavioral simulation of the oncoming moving object 211 in the environmental domain ENV.

In the behavioral simulation, for example, the simulation condition shown in Fig. 11 is set; a current position of the oncoming moving object 211 in a three-dimensional map is determined on the basis of (a) the three-dimensional map data, (b) body position data by the position detecting sensor, for example, and (c) relative distance data determined from the visible photographed image and the depth image; a path shape of this position (e.g. a road shape such as straight path, curved path, intersection or the like) is determined; and subsequently it is determined that what position (a position on the road) and what attitude (direction) the oncoming moving object 211 takes for a behavioral target (right turning, left turning, straight going, starting, stopping, or the like; i.e. oncoming moving object action target data in Fig. 11) in such determined situation of the oncoming moving object 211.

Further, in Embodiment 4, as the virtual sensor signals, the virtual visible photographed image signal and the virtual depth image signal are generated corresponding to the camera and the LiDAR/RADAR sensor in the sensor unit 11. The virtual visible photographed image signal is obtained, for example, by (a) determining a visual field of the camera from a current position and a direction of the camera (i.e. the on-surface moving object 201) on the basis of a specification (focal distance and/or the like) and (b) determining an image of the oncoming moving object 211, a construction, a road 221 and the like entering in the camera's visual field on the basis of the three-dimensional map data and the simulation result. The virtual depth image signal is obtained, for example, by determining a distance to an object (the oncoming moving object 211, a construction, or the like) in a sensing field of the LiDAR/RADAR sensor from a current position of the LiDAR/RADAR sensor (i.e. the on-surface moving object 201) on the basis of (a) the current position and a direction of the LiDAR/RADAR sensor and (b) the three-dimensional map data.

The control signal generating unit 44 generates a control signal for the on-surface moving object 201 so as to avoid a collision between the on-surface moving object 201 and the oncoming moving object 211, on the basis of the oncoming moving object action target data as the finally determined simulation condition.

### (b) Vehicle body state simulation of the on-surface moving object 201

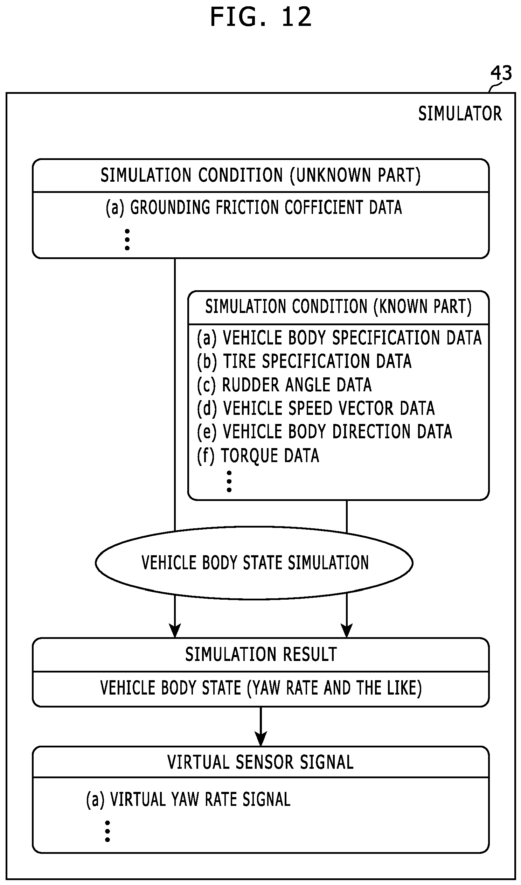

Fig. 12 shows a diagram that explains another example of a simulation in the device control system in Embodiment 4 of the present invention.

In Embodiment 4, the on-surface moving object 201 is an automobile, and the simulator 43 performs a vehicle body state simulation when the on-surface moving object 201 turns around.

In the vehicle body state simulation, for example, the simulation condition shown in Fig. 12 is set; and a tire supporting surface deformation simulation and a model analysis (deriving sorts of physical quantities such as cornering force and yaw rate based on a vehicle body model) are performed on the basis of (a) vehicle body specification data, (b) tire specification data, (c) rudder angle data by a rudder angle sensor, (d) vehicle speed vector data by a vehicle speed sensor, a gyro and the like, (e) vehicle body direction data by a GPS compass fixed on the vehicle body, (f) torque data by a torque sensor or the like, and the like.

Further, in Embodiment 4, as the virtual sensor signal, a virtual yaw rate signal is set corresponding to a yaw rate sensor in the sensor unit 11.

In Embodiment 4, real sensor signals of the rudder angle sensor, a vehicle speed vector sensor, a vehicle body direction sensor, a torque sensor and the like may be used as input of the simulation condition changing unit 42 (i.e. input of the machine-learned DNN).

The control signal generating unit 44 generates a control signal for the on-surface moving object 201 such that the on-surface moving object 201 takes a desired behavior, on the basis of grounding friction coefficient data as the finally determined simulation condition.

The following part explains a behavior of the device control system in Embodiment 4.

In Embodiment 4, the controller 2 acquires the real sensor signals from the aforementioned sensor units 11 and 31, iteratively performs the change of the simulation condition (unknown part), the simulation (the aforementioned behavioral simulation or vehicle body state simulation), the generation of the virtual sensor signal(s), and the calculation of the sensor errors until the sensor errors are converged, and finally determines a value of the simulation condition.

After the simulation condition is finally determined, the controller 2 generates a control signal corresponding to the finally determined simulation condition, and outputs the control signal to the on-surface moving object 201.

In case of the behavioral simulation, the controller 2 outputs a control signal to the on-surface moving object 201 for controlling the on-surface moving object 201 so as not to disturb an action of the oncoming moving object 211, on the basis of the determined action target of the oncoming moving object 211; and the control unit 12 of the on-surface moving object 201 controls the action unit 1a for a target motion state in accordance with this control signal.

In case of the vehicle body state simulation, the controller 2 generates a control signal for controlling a rudder angle, a torque and the like so as to avoid an inadequate behavior of the on-surface moving object 201 and outputs the control signal to the on-surface moving object 201, on the basis of the determined grounding friction coefficient data; and the control unit 12 of the on-surface moving object 201 controls the action unit 1a for a target driving state in accordance with this control signal.

Other parts of the configuration and the behavior of the device control system in Embodiment 4 are identical or similar to those in Embodiment 1 or 2, and therefore, not explained here.

As mentioned, in Embodiment 4, the on-surface moving object 201 is properly controlled on the basis of the status information obtained as the finally determined value of the simulation condition.

### Embodiment 5.

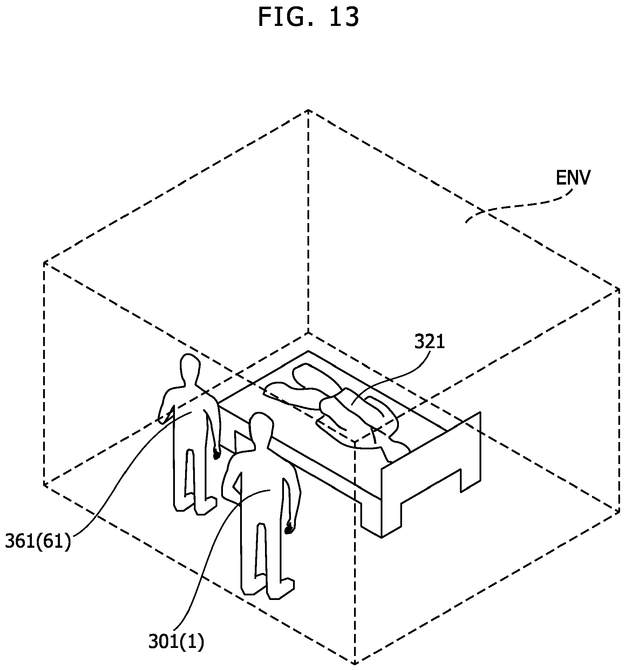

A device control system in Embodiment 5 is a specific example of the device control system described in Embodiment 1 or 2. Fig. 13 shows a perspective view diagram that indicates a control target device 1 in a device control system in Embodiment 5 of the present invention. In Embodiment 5, the control target device 1 is a workrobot 301 such as humanoid workrobot, humanoid care assistance robot, wearable workrobot, or wearable care assistance robot. The workrobot 301 shown in Fig. 13 as an example is a humanoid care assistance robot.

Further, in Embodiment 5, the workrobot 301 performs a specific work for a work target object in the environmental domain ENV, and the control unit 12 in the workrobot 301 has an autonomous working function (or an autonomous work assistance function). In the autonomous working function (or the autonomous work assistance function), the action unit 1a (motor or actuator) is electronically controlled so as to perform a target work correspondingly to a peripheral environment status. Therefore, recognizing the peripheral environment status is required, and in Embodiment 5, the controller 2 recognizes the peripheral environment status using the sensor units 11 and 31 in the following manner.

In Embodiment 5, the sensor unit 11 includes a camera that includes an imaging sensor. Specifically, in Embodiment 5, the sensor unit 11 includes (a) a camera that includes an imaging sensor, and (b) a LiDAR or RADAR sensor, as well as in Embodiment 3 or 4. The sensor unit 11 may include a sound sensor (microphone or the like), a body attitude status sensor (an angle sensor of a joint in the robot, or the like), a position detecting sensor (e.g. GPS sensor), and a gyro sensor. The sensor unit 31 may include a sensor that measures vital sign data of a care target (i.e. the work target object), for example.

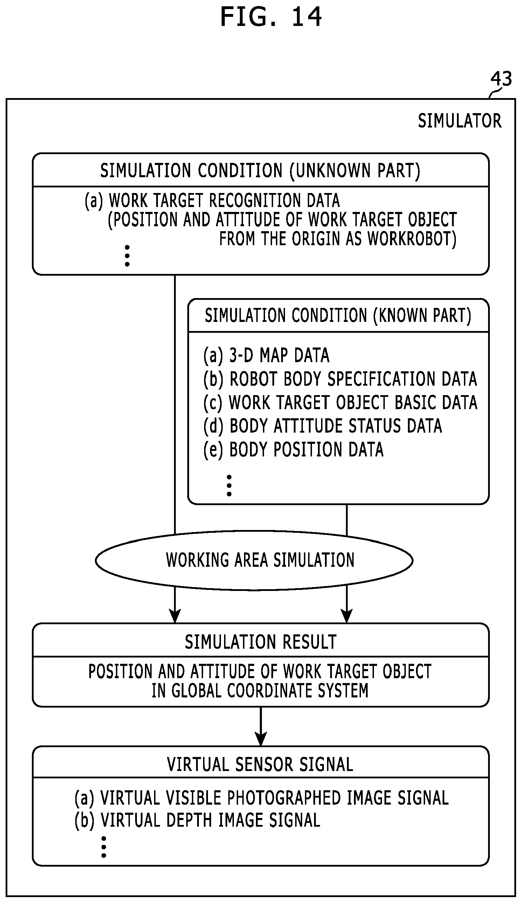

Fig. 14 shows a diagram that explains a simulation in the device control system in Embodiment 5 of the present invention.

In Embodiment 5, the simulator 43 performs a working area simulation of the workrobot 301. In the working area simulation, (a) the simulation condition (unknown part) is set as work target recognition data (data that indicates a position and an attitude of a work target object in a local coordinate system of which the origin is set as the workrobot 301 (the sensor unit 11)), and the simulation condition (known part) is set as (1) three-dimensional map data (i.e. shape data described in a global coordinate system) of a room in which the work target object is located, a structure in the room, and the like, (2) robot body specification data that indicates a body shape, a position of a movable joint, and the like, (3) work target object basic data that indicates a shape and size of the work target object, (4) body attitude status data that indicates a direction, an angle status of the joint and the like of the workrobot 301, (5) body position data that indicates a current position of the workrobot 301, and the like; and (b) a position and an attitude of the workrobot 301 in a global coordinate system are derived on the basis of this simulation condition in accordance with a predetermined computational model. If the work target object is a human (e.g. care receiver), an attitude of the work target object may be expressed using a human skeleton model (theoretical model) that includes plural joints, for example.

The direction of the workrobot 301 is obtained by the gyro sensor, for example. Further, the angle status of the joint in the workrobot 301 is obtained by the angle sensor, for example. Furthermore, the current position of the workrobot 301 is obtained by the position detecting sensor such as GPS sensor, for example.

Further, in Embodiment 5, as the virtual sensor signals, the virtual visible photographed image signal and the virtual depth image signal are generated corresponding to the camera and the LiDAR/RADAR sensor in the sensor unit 11. The virtual visible photographed image signal is obtained, for example, by (a) determining a visual field of the camera from a current position and a direction of the camera on the basis of a specification (focal distance and/or the like) of the camera of the workrobot 301 and (b) determining an image of the work target object, a structure and the like entering in the camera's visual field on the basis of the three-dimensional map data and the work target object basic data. The virtual depth image signal is obtained, for example, by determining a distance to an object in a sensing field of the LiDAR/RADAR sensor from a current position of the LiDAR/RADAR sensor on the basis of (a) the current position and a direction of the LiDAR/RADAR sensor and (b) the three-dimensional map data.

The following part explains a behavior of the device control system in Embodiment 5.

In Embodiment 5, the controller 2 acquires the real sensor signals from the aforementioned sensor units 11 and 31, iteratively performs the change of the simulation condition (unknown part), the working area simulation, the generation of the virtual sensor signals, and the calculation of the sensor errors until the sensor errors are converged, and finally determines a value of the simulation condition.

After the simulation condition is finally determined, the controller 2 generates a control signal corresponding to the finally determined simulation condition, and outputs the control signal to the workrobot 301.

For example, the controller 2 outputs to the workrobot 301 a control signal that indicates an action pattern (movement of the workrobot 301, operation of the joint, and/or the like) for a specific work for the work target object on the basis of the determined work target recognition data, and the control unit 12 of the workrobot 301 controls the action unit 1a so as to take an action of the specified action pattern (for example, if the work target object is a care receiver, an action pattern for holding him/her in arms, if the work target object is a parcel, an action pattern for lifting it up, or the like), in accordance with the control signal.

The next part explains a case that another autonomous action object 61 described in Embodiment 2 exists in the environmental domain ENV. In this case, as described in Embodiment 2, the control signal generating unit 44 performs the intention inference of this another autonomous action object 61, and controls an action of the workrobot 301 with taking into account a result of the intention inference.

Specifically, as shown in Fig. 13, if a cooperative worker 361 as the another autonomous action object 61 exists in the environmental domain ENV, the controller 2 detects the cooperative worker 361 in the environmental domain ENV on the basis of the aforementioned visible photographed image signal of the camera and/or the depth image signal. Subsequently, the control signal generating unit 44 of the controller 2 estimates work target recognition data of the cooperative worker 361 on the basis of the real sensor signals of the sensor units 11 and 31 (the visible photographed image signal, the depth image signal, and the like), the aforementioned simulation result, the other known part of the condition such as the three-dimensional map data, and the like.

The cooperative worker 361 may be a humanoid robot, may be a worker (a human) equipped with a wearable robot, or may be a worker (a human) without a wearable robot, but here the controller 2 estimates its action under an assumption that the cooperative worker 361 is a workrobot that is the same as the workrobot 301.

A similar simulation is performed under a simulation condition that is set as the estimated work target recognition data for the cooperative worker 361, and the control signal generating unit 44 estimates an action of the cooperative worker 361 on the basis of the work target recognition data and the simulation result, and generates a control signal for the workrobot 301 with taking into account the estimated action of the cooperative worker 361 (e.g. so as not to disturb an action of the cooperative worker 361).

Other parts of the configuration and the behavior of the device control system in Embodiment 5 are identical or similar to those in Embodiment 1 or 2, and therefore, not explained here.

As mentioned, in Embodiment 5, the workrobot 301 is properly controlled on the basis of the status information obtained as the finally determined value of the simulation condition.

### Embodiment 6.

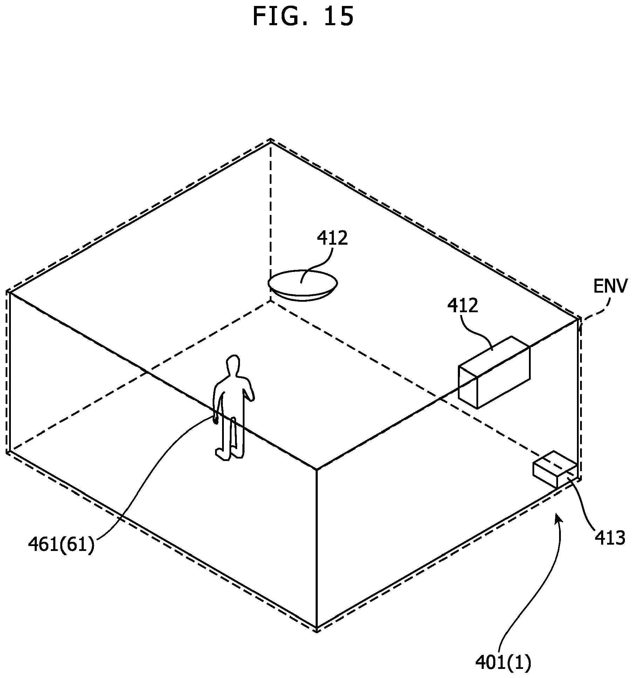

A device control system in Embodiment 6 is a specific example of the device control system described in Embodiment 1 or 2. Fig. 15 shows a perspective view diagram that indicates a control target device 1 in a device control system in Embodiment 6 of the present invention. In Embodiment 6, the control target device 1 is an electric equipment control system 401 installed in a smart house, a hall, or the like.

Further, in Embodiment 6, the electric equipment control system 401 controls electric equipment 412 installed in the environmental domain ENV. The electric equipment 412 is a kind of the action unit 1a, and includes lighting equipment, an air conditioner and/or the like affecting the environmental domain ENV.

In Embodiment 6, for example, a housing 413 may be installed other than the electric equipment 412 as the action unit 1a, and the control unit 12 and the controller 2 may be arranged in the housing 413. In such a case, the sensor unit 11 is a sensor unit arranged in/on the housing 413, and the sensor unit 31 is a sensor unit arranged in the environmental domain ENV, apart from the housing 413.

The electric equipment control system 401 has an autonomous control function, and electronically controls the action unit 1a (i.e. the electric equipment 412) correspondingly to a peripheral environment status so as to get a target state. For example, in the autonomous control function, the electric equipment 412 (air conditioner or the like) is autonomously controlled on the basis of a temperature distribution in the environmental domain ENV so as to cause the temperature distribution to get closer to a target temperature distribution, and the electric equipment 412 (lighting equipment or the like) is autonomously controlled on the basis of an illumination distribution in the environmental domain ENV so as to cause the illumination distribution to get closer to a target illumination distribution. Therefore, recognizing the peripheral environment status is required, and in Embodiment 6, the controller 2 recognizes the peripheral environment status using the sensor units 11 and 31 in the following manner.

In Embodiment 6, the sensor units 11 and 31 include a temperature sensor and an illumination sensor. Further, in Embodiment 6, other than the temperature sensor and the illumination sensor, the sensor units 11 and 31 include a camera that includes an imaging sensor, a sound sensor (microphone or the like), and the like. This camera photographs a part or all of the environmental domain ENV.

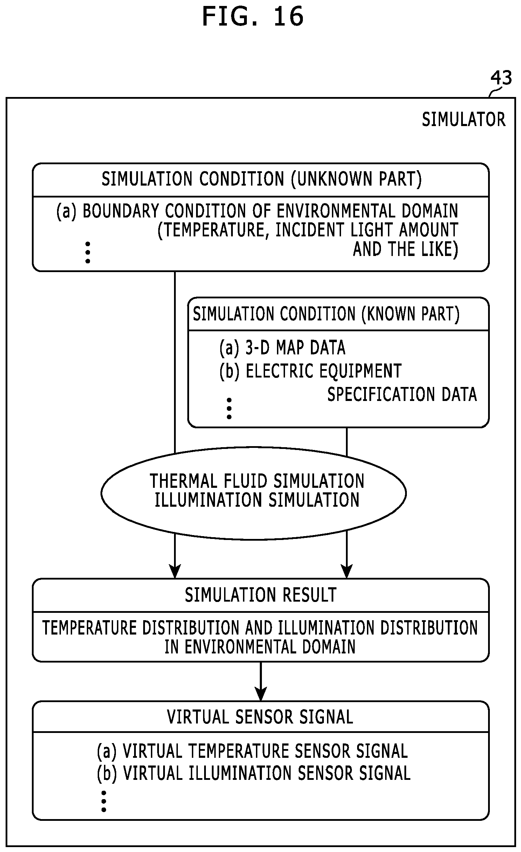

Fig. 16 shows a diagram that explains a simulation in the device control system in Embodiment 6 of the present invention.

In Embodiment 6, the simulator 43 performs a thermal fluid simulation and an illumination simulation in the environmental domain ENV, and thereby derives a temperature distribution and an illumination distribution in the environmental domain ENV. In the thermal fluid simulation, the simulation condition (unknown part) is set as a boundary condition (a temperature, a wind speed and the like at a wall surface and/or an opening) of the environmental domain ENV; and the simulation condition (known part) is set as (a) three-dimensional map data of the environmental domain ENV, (b) electric equipment specification data that indicates a heating value or an air flow amount (air flow speed) at each setting (operation condition) of the electric equipment 412 (air conditioner or heating device), and the like; and the temperature distribution and the wind speed distribution in the environmental domain ENV are derived in accordance with a known numerical simulation method. In the illumination simulation, the simulation condition (unknown part) is set as a boundary condition (an incident light amount from outside and the like at a wall surface and/or an opening); and the simulation condition (known part) is set as (a) three-dimensional map data of the environmental domain ENV, (b) electric equipment specification data that indicates an emitting light color and an emitting light amount at each setting (operation condition) of the electric equipment 412 (lighting equipment or light emitting device), and the like; and the illumination distribution in the environmental domain ENV is derived in accordance with a known numerical simulation method.

Further, in Embodiment 6, as the virtual sensor signals, a virtual temperature sensor signal and a virtual illumination sensor signal are generated corresponding to a temperature sensor and an illumination sensor in the sensor unit 11 or 31. The virtual temperature sensor signal is determined, for example, from a temperature at an installation position of the temperature sensor that is obtained from a result of the thermal fluid simulation, on the basis of a specification (an electric characteristic to temperature) of the temperature sensor. The virtual illumination sensor signal is determined, for example, from an illumination at an installation position of the illumination sensor that is obtained from a result of the illumination simulation, on the basis of a specification (an electric characteristic to illumination) of the illumination sensor.

The following part explains a behavior of the device control system in Embodiment 6.

In Embodiment 6, the controller 2 acquires the real sensor signals from the aforementioned sensor units 11 and 31, iteratively performs the change of the simulation condition (unknown part), the thermal fluid simulation and the illumination simulation, the generation of the virtual sensor signals, and the calculation of the sensor errors until the sensor errors are converged, and finally determines a value of the simulation condition.

After the simulation condition is finally determined, the controller 2 generates a control signal corresponding to the finally determined simulation condition and the simulation result, and outputs the control signal to the electric equipment control system 401.

For example, the controller 2 determines a setting of each device in the electric equipment 412 on the basis of the determined boundary condition of the environmental domain ENV so as to cause the temperature distribution and the illumination distribution in the environmental domain ENV to get closer to a target, and outputs to the electric equipment control system 401 a control signal that indicates the determined setting. The control unit 12 of the electric equipment control system 401 applies the specified setting to each device in the electric equipment 412 in accordance with the control signal.

The next part explains a case that another autonomous action object 61 described in Embodiment 2 exists in the environmental domain ENV. In this case, as described in Embodiment 2, the control signal generating unit 44 performs the intention inference of this another autonomous action object 61, and controls an action of the electric equipment control system 401 with taking into account a result of the intention inference.

Specifically, for example, as shown in Fig. 15, if a human 461 exists as another autonomous action object 61 in the environmental domain ENV, the controller 2 detects the human 461 in the environmental domain ENV on the basis of the aforementioned visual photographed image signal of the camera and/or the depth image signal.

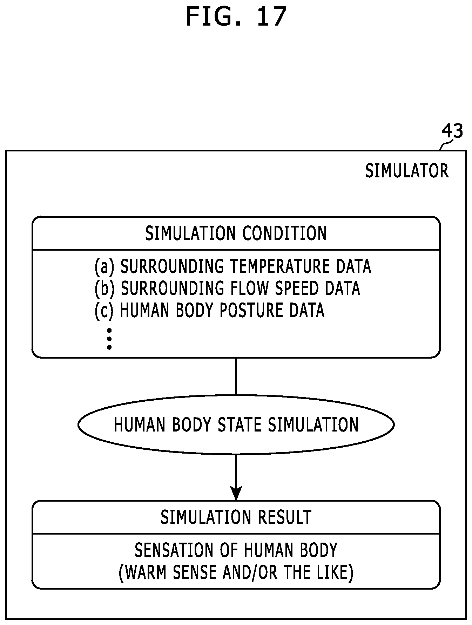

Fig. 17 shows a diagram that explains a simulation of another autonomous action object in the device control system in Embodiment 6 of the present invention. In this case, the autonomous action object is a human, namely, an autonomous action object that has another type than a type of the control target device 1 (i.e. the electric equipment control system 401).

As shown in Fig. 17, the simulation condition is set as (a) surrounding temperature data and surrounding flow amount data of the human 461, determined from the aforementioned simulation result for the electric equipment control system 401 and (b) human body posture data determined from a visible photographed image based on the visible photographed image signal; and a predetermined human body state simulation is performed and thereby sensation (here, a thermal sense status such as feeling hot or feeling cold) of the human 461 is obtained as the simulation result of this human body state simulation.

The control signal generating unit 44 generates a control signal for the electric equipment control system 401 on the basis of the simulation condition and the simulation result with taking into account the sensation of the human 461 or the like. For example, if the simulation result indicates a thermal sense status of "feeling hot", the control signal generating unit 44 generates a control signal that decreases a setting temperature of the air conditioner in the electric equipment control system 401, in order to decrease temperature at a position of the human 461.

Other parts of the configuration and the behavior of the device control system in Embodiment 6 are identical or similar to those in Embodiment 1 or 2, and therefore, not explained here.

As mentioned, in Embodiment 6, the electric equipment control system 401 is properly controlled on the basis of the status information obtained as the finally determined value of the simulation condition.

It should be understood that various changes and modifications to the embodiments described herein will be apparent to those skilled in the art. Such changes and modifications may be made without departing from the spirit and scope of the present subject matter and without diminishing its intended advantages. It is therefore intended that such changes and modifications be covered by the appended claims.

For example, in any of the aforementioned embodiments, a stereo camera may be used as the camera in the sensor unit 11 or 31, and the visible photographed image signal and the depth image signal may be obtained from a photographed image signal of the stereo camera. In addition, if the sensor unit 11 or 31 includes a stereo camera, the sensor unit 11 or 31 may not include the LiDAR/RADAR sensor.

Further, in any of the aforementioned embodiments, some data of the known part of the simulation condition (e.g. data measured as the real sensor signal) may be included in the unknown part. In such a case, consequently, even if a value of the real sensor signal gets to be improper due to a trouble of the sensor or the like, the data with a proper value is obtained from another real sensor signal. Specifically, in such a case, the aforementioned DNN is machine-learned such that if a value of the real sensor signal gets to be improper then the DNN provides the data with a proper value obtained from another real sensor signal. Further, for example, if the three-dimensional map data can be estimated from a photographed image of the camera, the three-dimensional map data may be included in the unknown part rather than in the known part of the simulation condition. In such a case, preparation of the three-dimensional map data, the three-dimensional road map data, or the like is not required.

Furthermore, in any of the aforementioned embodiments, the virtual visible photographed image signal and the visible photographed image signal as a real sensor signal may be a signal of a photographed visible image that has gradation or may be a signal of an edge image obtained by performing edge detection for such a photographed visible image.

Furthermore, in any of the aforementioned embodiments, the control signal may be used in the simulation performed by the simulator 43. For example, in such a case, if the control signal is successively generated in a time series, then the control signal at a time step previous to a current time step by 1 time step may be used in the simulation at the current time step. In such a case, consequently, the simulation gets higher accuracy.

Furthermore, in any of the aforementioned embodiments, if the simulation in the simulator 43 is a simulation that progresses over a series of plural time steps, and the virtual sensor signals are generated at the plural time steps in the time series, a recurrent neural network may be used as the machine-learned DNN in the simulation condition changing unit 42, and the real sensor signals at the plural time steps such that the virtual sensor signals at the plural time steps (or sensor errors (i.e. differences of the both) at the plural time steps) are set to input of the recurrent neural network.

Furthermore, in any of the aforementioned embodiments, the real sensor signal may be supplied from the sensor unit 11 or 31 to the controller 2 on a realtime basis or may be supplied with being buffered in between the sensor unit 11 or 31 and the controller 2.

## Claims

1. A device control system, comprising:
a control target device (1, 101, 201, 301, 401) fixed or moving in an environmental domain;
a sensor unit (11, 31) that is arranged in either the environmental domain or the control target device (1, 101, 201, 301, 401), and measures a specific physical quantity and outputs a real sensor signal corresponding to the measured physical quantity; and
a controller (2) that controls the control target device (1, 101, 201, 301, 401) on the basis of the real sensor signal;
wherein the controller comprises:
a simulator (43) that performs a simulation of a specific phenomenon in the environmental domain under a simulation condition that is set as specific status information of the control target device (1, 101, 201, 301, 401) and/or the environmental domain and thereby derives a simulation result, and virtually measures the specific physical quantity on the basis of the simulation result and thereby generates a virtual sensor signal;
a simulation condition changing unit (42) that changes the simulation condition on the basis of the real sensor signal and the virtual sensor signal; and
a control signal generating unit (44) that generates a control signal for the control target device on the basis of the simulation condition and/or the simulation result;
wherein iteratively until a sensor error between the real sensor signal and the virtual sensor signal is converged so as to satisfy a predetermined condition, the simulator (43) performs the simulation and the generation of the virtual sensor signal and the simulation condition changing unit (42) performs the change of the simulation condition.

2. The device control system according to claim 1, wherein the simulation condition changing unit (42) changes the simulation condition on the basis of the sensor error between the real sensor signal and the virtual sensor signal.

3. The device control system according to claim 1 or 2, wherein the control signal generating unit (44) generates the control signal from the simulation condition in accordance with a predetermined control model and thereby determines an action of the control target device (1, 101, 201, 301, 401); if another autonomous action object (61) exists in the environmental domain, estimates an action of the autonomous action object (61) under an assumption that the autonomous action object (61) decides the action of the autonomous action object (61) on the basis of a control model identical to the control model of the control target device; and generates the control signal with taking into account the estimated action of the autonomous action object (61) .

4. The device control system according to any of claims 1 to 3, wherein the control target device (1, 101, 201, 301, 401) is a motion object that takes a mechanical action; and
the control signal generating unit (44) performs attitude control and/or path planning for the motion object on the basis of the simulation condition and/or the simulation result.

5. The device control system according to any of claims 1 to 3, wherein the control target device (1, 101, 201, 301, 401) is an electric equipment control system, and performs control of an electric equipment (412) on the basis of the simulation condition.

6. A device control method, comprising the steps of:
acquiring a real sensor signal from a sensor unit (11, 31) that is arranged in either an environmental domain or a control target device (1, 101, 201, 301, 401) fixed or moving in the environmental domain and measures a specific physical quantity and outputs the real sensor signal corresponding to the measured physical quantity;
deriving a simulation result by performing a simulation of a specific phenomenon in the environmental domain under a simulation condition that is set as specific status information of the control target device (1, 101, 201, 301, 401) and/or the environmental domain;
generating a virtual sensor signal by virtually measuring the specific physical quantity on the basis of the simulation result;
changing the simulation condition on the basis of the real sensor signal and the virtual sensor signal; and
generating a control signal for the control target device on the basis of the simulation condition and/or the simulation result;
wherein iteratively until a sensor error between the real sensor signal and the virtual sensor signal is converged so as to satisfy a predetermined condition, performing (a) the simulation and the generation of the virtual sensor signal and (b) the change of the simulation condition.

7. A non-transitory computer readable recording medium storing a device control program, wherein the device control program causes a computer (21) to act as a controller (2) that controls a control target device (1, 101, 201, 301, 401) on the basis of a real sensor signal obtained by a sensor unit (11, 31) that is arranged in either the environmental domain or the control target device (1, 101, 201, 301, 401) and measures a specific physical quantity and outputs the real sensor signal corresponding to the measured physical quantity; and
the controller (2) comprises:
a simulator (43) that performs a simulation of a specific phenomenon in the environmental domain under a simulation condition that is set as specific status information of the control target device (1, 101, 201, 301, 401) and/or the environmental domain and thereby derives a simulation result, and virtually measures the specific physical quantity on the basis of the simulation result and thereby generates a virtual sensor signal;
a simulation condition changing unit (42) that changes the simulation condition on the basis of the real sensor signal and the virtual sensor signal; and
a control signal generating unit (44) that generates a control signal for the control target device (1, 101, 201, 301, 401) on the basis of the simulation condition and/or the simulation result;
wherein iteratively until a sensor error between the real sensor signal and the virtual sensor signal is converged so as to satisfy a predetermined condition, the simulator (43) performs the simulation and the generation of the virtual sensor signal and the simulation condition changing unit (42) performs the change of the simulation condition.
